(19) Europäisches Patentamt
European Patent Office
Office européen des brevets

(11) Publication number : 0 419 652 B1

# (12) EUROPEAN PATENT SPECIFICATION

(45) Date of publication of patent specification : 05.01.94 Bulletin 94/01

(51) Int. Cl.$^5$ : C08F 220/54, G01N 27/26

(21) Application number : 90908059.0

(22) Date of filing : 17.04.90

(86) International application number : PCT/US90/02098

(87) International publication number : WO 90/12820 01.11.90 Gazette 90/25

## (54) POLYMERIC ELECTROPHORESIS MEDIA.

(30) Priority : 18.04.89 US 339350
18.04.89 US 339456
18.04.89 US 339468
18.04.89 US 339469
02.11.89 US 430995
02.11.89 US 430996
02.11.89 US 431043
02.11.89 US 431048

(43) Date of publication of application : 03.04.91 Bulletin 91/14

(45) Publication of the grant of the patent : 05.01.94 Bulletin 94/01

(84) Designated Contracting States : AT BE CH DE FR GB IT LI NL SE

(56) References cited :
EP-A- 0 340 653
US-A- 3 281 400
US-A- 4 582 868

(73) Proprietor : EASTMAN KODAK COMPANY
343 State Street
Rochester, New York 14650-2201 (US)

(72) Inventor : EIKENBERRY, Jon, Nathan
168 Pinecrest Drive
Rochester, NY 14617 (US)
Inventor : LA TART, David, Brewer
285 Cinnabar Road
Rochester, NY 14617 (US)
Inventor : OSTERHOUDT, Hans, Walter
4090 Canal Road
Spencerport, NY 14559 (US)
Inventor : PONTICELLO, Ignazio, Salvatore
21 Copper Woods
Pittsford, NY 14534 (US)
Inventor : CHRISTY, Kenneth, George, Jr.
16 Iva Mae Drive,
North Chili, NY 14514 (US)

(74) Representative : Nunney, Ronald Frederick Adolphe et al
Kodak Limited Patent Department Headstone Drive
Harrow Middlesex HA1 4TY (GB)

EP 0 419 652 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a medium or element for electrophoresis and to acrylamide based copolymers prepared from certain acrylic monomers such as those disclosed in EP-A-89107729.9 filed on April 28, 1989 entitled "Kit for Electrophoresis Gel Medium". More particularly, it relates to improved polymeric gel media suitable for electrophoretic separation of biopolymers such as proteins and polynucleic acids (DNA, RNA and their derivatives or fragments) prepared from acrylamide based copolymers.

Acrylamide based copolymers having vinylsulfonyl or chloroethylsulfonyl groups as media for electrophoresis are described in a number of patent publications, for example, US-A-4,582,868. Such materials are also known to be gelatin hardeners and crosslinkable polymers useful as binders in film formation or for other uses.

US-A-3,625,694 describes polymer mordants having active aldehyde, chloroalkanoyl (such as chloroacetyl and chloropropionyl), chloroalkyl (such as chloromethyl), vinylsulfonyl, and other active groups for anchoring (crosslinking) the mordant to a gelatin matrix. US-A-4,193,795 and US-A-4,201,840 describe polymer mordants having vinylsulfonyl and chloroethylsulfonyl groups to covalently bind dyes.

In practice, various supporting media are used to minimize convection and diffusion, and to effect separation both on the basis of molecular size and of net charge. The most popular support media are sheets of paper or cellulose acetate, agarose, starch, and polyacrylamide. Paper, cellulose acetate, and similar porous materials are relatively inert and serve mainly for support and to minimize convection. Separation of proteins using these materials is based largely upon the charge density of the proteins at the pH selected.

However, the use of starch, agarose and polyacrylamide gels not only minimize convection and diffusion but also actively participate in the separation process by materials providing a restrictive medium in which the average size of the polymeric network opening (or average pore size) can be controlled to achieve a molecular fractionation in a desired molecular size range. In this way, molecular sieving occurs and provides separation on the basis of both charge density and molecular size instead of upon the charge density of the proteins at the pH selected only.

Agarose is rarely used at concentrations higher than 5% because such solutions are very viscous and not easily poured. Agarose is therefore widely used at concentrations < 5% (w/v) for the electrophoresis of large molecules, for example, high molecular weight proteins, and polynucleotides.

The ability to produce gels having a wide range of polymer concentrations (and, therefore, since the gel network opening decreases with increasing polymer concentration, a wide range of controlled average pore sizes) as well as to form pore size gradients within the gels by virtue of polymer concentration gradients, are additional advantages of polyacrylamide as an electrophoresis gel medium. Control over pore size enables mixtures to be sieved on the basis of molecular size and enables molecular weight determinations to be performed. These determinations are especially accurate if the proteins are treated with a detergent, such as sodium dodecyl sulfate (SDS), which neutralizes the effects of inherent molecular charge so that all SDS treated molecules, regardless of size, have approximately the same charge density values. This technique is referred to as SDS-PAGE (Sodium Dodecyl Sulfate-PolyAcrylamide Gel Electrophoresis).

The popularity of polyacrylamide-based electrophoresis gels stems not only from the comparatively wide latitude in polymer content and buffer composition attainable with them, but also from the high degree of inertness in the gel with respect to both the voltages applied and the solutes being separated, the ease with which proteins are detected once separated and good reproducibility with carefully prepared gels.

Further, it is desirable to have an acrylamide-based gel (that is, a gel comprising a crosslinked vinyl polymer comprising at least 50% by weight of monomeric units selected from acrylamide and N-substituted acrylamides or methacrylamides) that could be used at low concentrations for the separation of large molecules with the advantages of low viscosity, easy pourability and high purity.

Additional advantages of using polyacrylamide as an electrophoresis gel medium are the wide range of polymer concentrations, wide range of controlled average pore sizes and the ability to form pore size gradients within the gels by virtue of polymer concentration gradients. Control over pore size enables mixtures to be sieved on the basis of molecular size and enables molecular weight determinations to be performed. These determinations are especially accurate if the proteins are treated with a detergent, such as sodium dodecyl sulfate (sodium dodecyl sulfate), which neutralizes the effects of inherent molecular charge so that all sodium dodecyl sulfate treated molecules, regardless of size, have approximately the same charge density values. This technique is referred to as (Sodium Dodecyl Sulfate-PolyAcrylamide Gel Electrophoresis, identified herein as PAGE).

The popularity of polyacrylamide-based electrophoresis gels stems not only from the comparatively wide latitude in polymer content and buffer composition attainable with them, but also from the high degree of inertness in the gel with respect to both the voltages applied and the solutes being separated, the ease with which proteins are detected once separated and good reproducibility with carefully prepared gels.

Conventionally, polyacrylamide gel media for use in sodium dodecyl sulfate-PAGE electrophoresis have been prepared in situ by free radical induced polymerization of a monomer such as acrylamide and a crosslinking agent, most commonly N,N'-methylenebisacrylamide, under oxygen-free conditions in the presence of water, a buffer, a polymerization initiator, and a polymerization catalyst.

The usual practice is to perform a free radical polymerization with acrylamide and a suitable bis monomer such as N,N'-methylenebisacrylamide (often simply referred to as "bis") in order to obtain a gel. Such gel formation is successfully done only as several precautions are taken, namely: (a) very high purity starting materials should be used; (b) the solution of monomers and buffer should be degassed to remove oxygen; (c) a free radical initiator and a catalyst must be quickly mixed into the degassed solution; (d) the solution should be quickly poured between two glass plates or down a glass tube, the lower end of which in either case is sealed to prevent leakage; and (e) the gelation should proceed with (i) oxygen largely excluded and (ii) adequate means for heat dissipation being present so that excess heat does not cause gel nonuniformities.

Thus, the preparation of a polyacrylamide gel medium for electrophoresis having the desired dimensions and consistency requires a great deal of skill and care, as well as keeping the solution free from oxygen.

Precautions are also required in handling the monomers since both acrylamide and bis have been identified as known neurotoxins and suspected carcinogens.

There are several alternatives to the above-described procedure whereby the user makes electrophoresis gels by free radical polymerization and crosslinking in situ. These include (a) the use of preformed gels in cassettes and (b) the use of preformed gels on flexible supports. With either of these alternatives, however, some operating freedom or flexibility with regard to gel size, polymer content in the gel and buffer content is lost. Also - especially with precast gels in cassettes made by free radical polymerization and crosslinking - there generally remain, after completion of the gel formation reaction, some unreacted monomers, initiator by-products and catalyst. The presence of such species poses some toxicological hazards to the user and may interfere with the electrophoretic separation to be performed. Also, such precast gels have been found to have limited shelf lives.

US-A-4,582,868 describes the crosslinking of acrylamide-rich copolymers to form electrophoresis gel media by a non-free radical induced mechanism that does not require exclusion of oxygen.

Typically, copolymers of acrylamide and a monomer that affords sites for subsequent non-free radical initiated crosslinking by treatment with a crosslinking agent, for example, an acrylamide derivative such as N-[3-(2-chloroethylsulfonyl)propionamidomethyl]acrylamide,

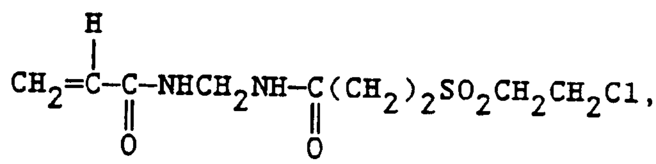

an acrylate derivative such as 2-[3-(2-chloroethylsulfonyl)propionyloxy]ethyl acrylate,

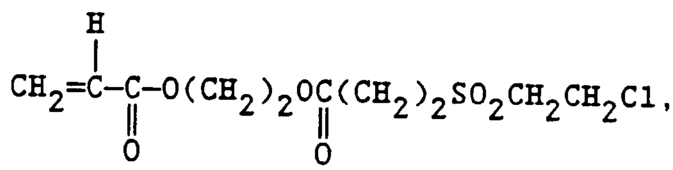

or an active ester such as N-[2-(ethoxycarbonylmethoxycarbonyl)ethyl]acrylamide:

$$CH_2=CHCONHCH_2CH_2COOCH_2COOC_2H_5$$

are prepared, in accordance with US-A-4,582,868, by a free radical initiated polymerization in the absence of oxygen. Thereafter, in a separate procedure, which can safely be performed in the presence of oxygen, the chloroethylsulfonyl or other pendent reactive group-containing polymers are crosslinked by reaction at a suitable pH with a bis-nucleophile crosslinking agent such as a diamine or a dithiol. In this regard, it is noted that electrophoresis often is performed at pH values that facilitate dehydrohalogenation of the chloroethylsulfonyl groups. If the vinylsulfonyl groups so formed are not all reacted with the intended crosslinking agent, they could react with amino groups on dissolved proteins during electrophoresis. Such reaction would artifactually retard the electrophoretic migration of proteins and consequently give misleading electrophoresis results in relation to the results obtained with electrophoresis gels formed by the free radical polymerization of acrylamide and bis alone. Therefore, enough crosslinking agent should be used to assure complete reaction of these groups.

Despite the availability of the above-described alternatives, electrophoresis media are still generally prepared by the polymerization of vinyl monomers at the time of use. This necessarily involves exposure of the operator to monomers prior to use and to residual monomers during use. Such monomers are suspected carcinogens, and at least some are known to be neurotoxins.

Although bis is the most widely used crosslinker for acrylamide-based electrophoresis gels, bis-crosslinked gels generally cannot be resolubilized. The ability to solubilize the gel after performing electrophoresis is advantageous in that it enables one to recover a resolved species from the gel. The use of an alternative, cleavable crosslinker such as diallyltartardiamide (DATD)

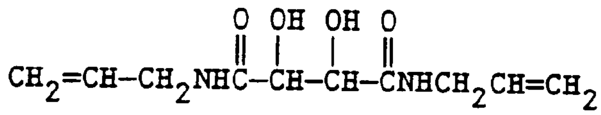

permits the researcher to achieve such recovery. After electrophoresis, each portion of the gel to be solubilized is excised and treated in a dilute solution of periodic acid. The -CHOH-CHOH- linkage in the middle of the crosslink is cleaved in the periodic acid solution and a solution of the thus solubilized polymer is produced. From this solution one can easily recover the resolved species for further experiments. Obviously, it would be advantageous to provide researchers with the option of gel solubilization after electrophoresis.

Also, if electrophoresis is to be performed soon after gelation, the chemical reaction (that is, crosslinking) responsible for gelation must be compatible with the buffers present for electrophoresis. Gel electrophoresis is often performed at pH values ranging from 5 to 9.

A particularly popular system for the determination of molecular weights of proteins by electrophoresis was described by Laemmli, Nature, 227:680 (1970). In this system, two gels are used, one directly above the other, with a multi-phasic buffer system. The upper (or stacking) gel is at pH 6.8, which is achieved with tris(hydroxymethyl)aminomethane to which HCl has been added to lower the pH. The stacking gel has a low polymer concentration (generally from 4 to 6% w/v). Its purposes are (a) to provide a medium onto which samples can be loaded in discrete lanes and (b) to concentrate all species in a particular sample at the interface between the stacking gel and the lower (or resolving) gel. In meeting objective (b), the solutes, which are generally sodium dodecyl sulfate-denatured proteins, are "stacked" together (or very nearly so), that is, are concentrated at the interface of the two gels, just before entering the resolving gel. For the stacking to occur effectively, the proteins, rather than the buffer, should carry most of the current and there should be no molecular size separation.

Molecular size separation occurs in the resolving gel, where the buffer carries most of the current and the solutes migrate at a velocity determined by the voltage gradient and the retardation due to the pore size distribution of the crosslinked polymer gel. The pH in the resolving gel is typically 8.8 and the polymer concentration is usually at least 10% (w/v).

In summary, the popular Laemmli procedure requires two gels, the lower of which (resolving gel) is larger (thereby providing a longer path for solutes to traverse) and contains a higher concentration of the gelled polymer, and therefore a smaller average pore size than that of the upper, or stacking gel. The conditions recommended by Laemmli are:

| 0 | Stacking Gel | Resolving Gel |
|---|---|---|
| pH | 6.8 | 8.8 |
| buffer | 0.125 M Tris(hydroxy methyl) aminomethane hydrochloride | 0.375 M Tris(hydroxy methyl)aminomethane hydrochloride |
| gel conc., % (w/v) | 4-6 | > 10 |

Despite the teachings of Laemmli over the prior art in regard to use of a stacking gel, it is still desirable to be able to coat the solutions to be gelled in the presence of oxygen so that they can be easily and safely poured to form gels quickly and solubilize gels or portions thereof for sample recovery after electrophoresis.

However, for the electrophoretic separation of large molecules, such as high molecular weight proteins and polynucleotides, only a single (resolving) gel is typically used. This gel, (typically agarose in the prior art) is

generally formed from a lower concentration of a high molecular weight polymeric material than the resolving gel used in the Laemmli procedure, in order to have appropriate larger pore size characteristics for the electrophoretic separation of the larger molecules.

The problems noted above are overcome with a water-soluble copolymer characterized wherein it has the structure

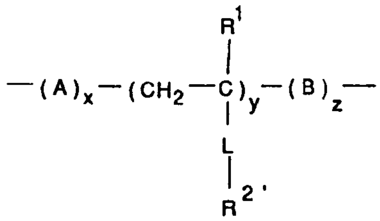

wherein L is substituted or unsubstituted alkylene, having 1 to 20 carbon and heteroatoms in the backbone, substituted or unsubstituted arylene having 6 to 12 nuclear carbon atoms, a divalent heteroatom or heteroatom-containing group,

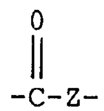 ,

or a combination of two or more thereof, wherein Z is a divalent heterocyclic group having 5 to 7 nuclear carbon and heteroatoms,

-A- represents recurring units derived from one or more polymerized acrylamide monomers, $R^1$ is hydrogen or methyl, $R^{2'}$ is a haloacetamido group, -B- represents recurring units derived from any other polymerized vinyl monomers, and x, y, and z represent weight percents of the recurring units, x being 50-95 preferably 50-90 weight percent, y being 1-50 weight percent, and z being 0-45 weight percent.

Regarding these copolymers, EP-A-0 340 653 is part of the state of the art according to Article 54(3) EPC and discloses a water soluble copolymer of a mixture of monomers comprising (a) at least 50% by weight of a monomer selected from the unsubstituted and substituted acrylamide monomers, (b) from 1% to 50% by weight of a monomer that contains a functional group that will enter into a crosslinking reaction by other than a free radical initiated mechanism, and (c) from 0 to about 49% by weight of one or more monomers different from monomers (a) and (b). Included among a list of monomers from which monomer (b) may be selected are N-(3-chloroacetamidopropyl) methacrylamide, 2-chloroacetamidoethyl methacrylate, 4-chloroacetamidostyrene, m- and p- chloroacetam-idomethylstyrene, N-(3-chloroacetami-docarbonyliminopropyl) methacrylamide, 2-chloroacetamidocarbonyliminoethyl methacrylate, 4-chloroacetamidocarbonyliminostyrene, and m- and p-chloroacetamidocarbonyliminomethylstyrene.

In another aspect of the invention, a method for preparing an electrophoresis gel in situ comprises mixing an aqueous solution of the copolymer as described above, with a selected crosslinking agent that will react with crosslinkable sites on the copolymer by a reaction with the selected crosslinking agent that does not involve a free-radical vinyl addition mechanism.

In still another aspect of the invention, an element for electrophoresis is characterized as comprising a crosslinked polymer which, before crosslinking with a crosslinking agent, is the copolymer described above.

In a further aspect of the invention, an electrophoresis element is characterized as comprising a copolymer as described above, which copolymer has been prepared as a crosslinked gel by the method described above.

Moreover, the copolymer described above, after crosslinking with a crosslinking agent, can be used as either a resolving gel or as a stacking gel.

This invention also provides an electrophoresis element which comprises both a resolving gel and a stacking gel,

the element characterized wherein the resolving gel comprises a first copolymer as described above and having an $\overline{M}_w$, weight molecular weight, of less than 100,000 and an $\overline{M}_n$, number molecular weight, of at least 7,000,

the stacking gel comprises a second copolymer as described above and having an $\overline{M}_w$, weight molecular weight, of greater than 100,000 and an $\overline{M}_n$ number molecular weight, of greater than 50,000.

with each copolymer having been prepared as a crosslinked gel by the method as described above.

In a final aspect of the invention, a kit for electrophoresis is characterized as comprising the copolymer

as described above, or a combination of the variations of the copolymer as described above, and in a container separate from the copolymer(s), a crosslinking agent for crosslinking the copolymer by a reaction that does not involve a free-radical vinyl addition mechanism.

Advantageous features of this invention include: the ability to coat the solutions to be gelled in the presence of oxygen so that they can be easily and safely poured, the formation of the gels quickly and solubilization of the gels or portions thereof for sample recovery after electrophoresis.

The copolymers of the present invention relate to electrophoresis media comprising crosslinked polymers which, before crosslinking, conform to the following structure

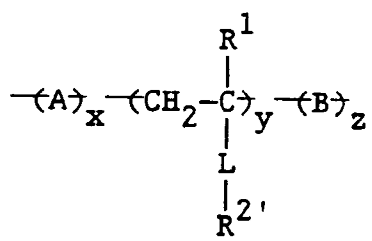

wherein L is substituted or unsubstituted alkylene generally having 1 to 20 carbon and heteroatoms in the backbone. This definition of alkylene is meant to include alkylene groups interrupted or terminated with oxy, thio, $-NR^3-$ ,wherein $R^3$ is hydrogen, substituted or unsubstituted alkyl of 1 to 6 carbon atoms (such as methyl, chloromethyl or 2-hydroxyethyl) or substituted or unsubstituted aryl of 6 to 10 carbon atoms (such as phenyl, naphthyl, or xylyl), -Z- (as defined below), ester (-COO-), amide (-CONH-), urylene (-NBCONH-), urethane (-NHCOO-), sulfonyl ($-SO_2-$), carbonate, sulfonamide, azo, or phosphone. Representative alkylene groups include methylene, ethylene, isobutylene, hexamethylene, carbonyloxyethoxycarbonyl, methylenebis(iminocarbonyl), carbonyloxydodecylenecarbonyloxyethylene, carbonyliminomethyleneiminocarbonyliminoethylene, carbonyliminomethyleneiminocarbonylethylene, carbonyliminotrimethyleneiminocarbonyl, and carbonyloxyethyleneiminocarbonyl

L can also be a divalent heteroatom (or heteroatom-containing group) such as oxy, thio, $-NR^3-$ where $R^3$ is as defined above, ester (-COO-), amide (-CONH-), urylene (-NHCONH-), urethane (-NHCOO-), sulfonyl ($-SO_2-$), carbonate, and sulfonamide.

Also included in this definition of L are divalent groups which are combinations of two or more of any of the divalent heteroatoms,

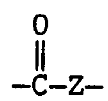

wherein Z is a divalent heterocyclic group having alkylene, and arylene groups defined above, for example, phenylene, arylenealkylene, alkylene-arylenealkylene, phenyleneiminocarbonyl, and others readily determined by one of ordinary skill in the art.

L can further be substituted or unsubstituted arylene generally having 6 to 12 nuclear carbon atoms. Representative arylene groups include phenylene, tolylene, naphthylene, and others noted in the patents mentioned above.

Preferably, L is substituted or unsubstituted alkylene interrupted and/or terminated with heteroatom-containing groups as defined or a combination of phenylene and alkylene groups. alkylene, arylene, a divalent heteroatom,

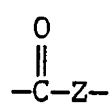 ,

or a combination of two or more thereof, wherein Z is as defined above.

More preferably, L is an $-(R^3)_k-(COXR^4)_m-$ $(NHCO)_n-$ group where $R^3$ is arylene or arylene-$R^4$- wherein $R^4$ is alkylene of 1 to 6 carbon atoms, X is -O- or -NH-, and k, m, and n are each 0 or 1, provided that k is 0 when m is 1, and m is 0 when k is 1, where phenylene or phenylenemethylene is most preferred.

In the copolymer structure above, -A- represents recurring units derived from one or more polymerized acrylamide monomers such as acrylamide, N-isopropylacrylamide, 2-acrylamido-2-hydroxymethyl-1,3-propanediol, N-isopropylacrylamide, N-hydroxymethylacrylamide, N-(1,1-dimethyl-3-oxo-butyl)acrylamide, N-methylmethacrylamide, 2-acrylamido-2-hydroxymethyl-1, 3-propanediol, methacrylamide, 3-(3-dimethylaminopropyl)acrylamide, N,N-dimethylacrylamide, N,N-diethylacrylamide, N-isopropylmethacrylamide, and 3-(2-dimethylaminoethyl)acrylamide. Particularly preferred is (unsubstituted) acrylamide, and preferably acrylamide. $R^1$ is hydrogen or methyl, $R^{2'}$ is a haloacetamido group, -B- represents recurring units derived from any other polymerized vinyl monomers including styrene or styrene derivatives, divinyl, diacrylic and diacrylamide monomers such as divinylbenzene, ethylene diacrylate, ethylene dimethacrylate, N,N'-methylene-bisacrylamide, and x, y, and z represent weight percents of the recurring units, x being 50-90 weight percent, y being 1-50 weight percent, and z being 0-45 weight percent.

The foregoing polymers can be crosslinked with agents having two or more amino, mercapto, sulfinic acid, or phenolic hydroxy groups such as ethylenediamine, 1,3-propanediamine, 1,3-propanedithiol, dithiothreitol, dithioerythreitol, 1,5-pentanediamine, hexamethylenediamine, diethylenetriamine, triethylenetetramine, propylenediamine, di(aminomethyl)ether, 1,8-diamino-4-(aminomethyl)octane, xylylenediamine, hydroquinone, bisphenol A, bisphenol sulfone, 1,4-butanedisulfinic acid, benzenedisulfinic acid, thioethanolamine, p-aminothiophenol, and butylenediamine.

More particularly, preferred crosslinking agents are bis mercaptans having in its backbone chain the

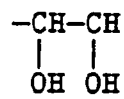

group.

Examples of these more preferred crosslinking agents are dithiothreitol and dithioerythreitol, with dithiothreitol being most preferred.

In a preferred embodiment, the reactive group $R^{2'}$ is the chloroacetyl, especially in the form of a chloroacetamido group. This group is electrophilic and would be expected to react with a nucleophile such as an amine or a thiol. We have found that the reaction with a thiol occurs much more rapidly than with an amine at the pH values (7-10) of most interest for electrophoresis. Thus we have found in one preferred embodiment that dithiothreitol $HSCH_2(CHOH)_2CH_2SH$ is a very effective crosslinking agent for this class of polymers. The advantages of dithiothreitol, besides the rapid crosslinking reaction even in the presence of a primary amine (hydroxymethyl aminomethane buffer), include (a) water solubility, (b) low toxicity, and (c) susceptibility to post-electrophoresis reaction with periodic acid to solubilize the gel or selected portions thereof.

The chloroacetamido-thiol reaction is pH sensitive and produces HCl as a by-product of the reaction:

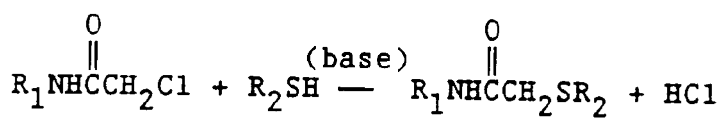


Consequently, it is advantageous to adjust to 7.8 and 9.4, respectively, the pH's of the hydroxymethyl aminomethane·HCl solutions used in the stacking gel and resolving gel buffers. These adjustments increase the rate of reaction and compensate for the generation of HCl. The electrophoretic separation of sodium dodecyl sulfate-complexed proteins on dithriothreitol crosslinked poly[acrylamide-co-N-(3-chloroacetamidopropyl)methacrylamide] copolymers compares very favorably to the separation obtained on acrylamide/bis gels.

Selection and incorporation of a suitable buffer is well within the knowledge of skilled workers in the electrophoresis art and depends upon the materials to be separated by the electrophoresis process in which the medium is to be employed. Such buffers and bases for selecting them are described, for example, in Andreas Chrambach, "The Practice of Quantitative Gel Electrophoresis," VCH Publishers, Deerfield Beach, Florida, U.S.A. (1985), and U.K. Laemmli, Nature, 227:680, (1970).

The polymerized units bearing the chloroacetamido group should be present in the copolymer only to the extent needed to provide the desired degree of crosslinking density in the polymeric gel. Less than the necessary amount would lead to gels in which the crosslink density is too low, whereas greater amounts than needed would detract from the acrylamide-like character that we seek. The crosslink density and molecular weight requirements are satisfied if the copolymer contains on a weight basis 10% recurring units derived from N-(3-chloro- acetamidopropyl)methacrylamide monomer (on a mole basis this is 3.5% of the monomer.

The weight average molecular weight $\overline{M}_w$ and the number average molecular weight $\overline{M}_n$ are important parameters that should be properly selected in order for a preformed polymer that is subsequently crosslinked with a chemical crosslinking agent that does not involve a free-radical vinyl addition mechanism, first to produce a gellable polymer solution for forming a resolving electrophoresis gel that (1) is easily poured into a slot (mold, tube, or between glass plates) no greater than 0.15 cm thick, (2) has a short gel time (that is, 4 to 10 minutes; by "gel time" is meant the time from addition of the crosslinking agent until the solution cannot be poured easily), but (3) remains pourable into said slot for a sufficient time to fill an electrophoresis mold of 14 x 14 x 0.15 cm (which takes 4 to 6 minutes), and second, within 10 minutes to 2 hours after addition of the crosslinking agent, to produce a firm gel having (1) sufficient crosslink density to afford good molecular sieving during electrophoresis, (2) good resolution during electrophoresis, and (3) sufficient physical integrity to permit manual removal of the hardened gel from the mold shortly after electrophoresis as well as its handling without causing detrimental flow, compression, fracture, stretch, tear or disintegration of the gel.

With 10% (by weight) N-(3-chloroacetamidoproply)methacrylamide in the resolving gel ($G_R$) copolymer, the number of equivalents of crosslinking site per gram (y) can be computed as:

$$y = \frac{0.10}{218} = 4.59(10^{-4})$$

Knowing y and the molecular weight between crosslinks ($\overline{M}_c$) desired permits the estimation of the minimum value of $\overline{M}_n$ for the starting copolymer consistent with achieving the crosslink density sought.

$$\frac{1}{\overline{M}_n} - \frac{y}{2} - \frac{1}{\overline{M}_c} = 2.30(10^{-4}) - \frac{1}{5.8\,(10^3)}$$

$$\overline{M}_n = 1.7(10^4)$$

The preferred weight average molecular weight $\overline{M}_w$ is not estimated so directly. We have found, nevertheless, that the elapsed time necessary will form a gel after addition of crosslinking of crosslinking agent to an aqueous solution of polymer in accordance with the invention decreases with increasing $\overline{M}_w$ (as expected) and that for a 12% (w/v) polymer concentration in the resolving gel, one can achieve a gelation time of six minutes (time between crosslinker addition and gelation) if $\overline{M}_w$ is approximately $4.6(10^4)$.

The requirement of $\overline{M}_w$ and $\overline{M}_n$ in said one copolymer component of electrophoresis media used as a resolving gel are:

1) $\overline{M}_w$ is small enough that the addition of 1.25 to 1.5 times the stoichiometric amount of the selected crosslinking agent will not raise the viscosity of the mixture so much that the media cannot be poured into a 0.15 x 14 x 14 cm mold within 4 to 10, preferably 6 to 8 minutes after addition of the crosslinking agent.

2) $\overline{M}_n$ is large enough to provide a crosslink density sufficient to form a gel after 10 minutes after addition of 1.25 to 1.5 times the stoichiometric amount of the selected crosslinking agent, said gel ultimately having sufficient integrity within 2 hours after pouring to be removed from the mold and handled gently without tearing or falling apart.

It is preferred that the number of equivalents of crosslinking sites per gram of polymer is in the range of $0.45(10^{-4})$ to $14(10^{-4})$, preferably at least $2/\overline{M}_n$, more preferably from about $2.25(10^{-4})$ to $10(10^{-4})$, and most preferably about $4(10^{-4})$ to $7(10^{-4})$.

More particularly, for a copolymer of the present invention used for preparing a resolving gel for electrophoresis, the water soluble copolymer should have a number average molecular weight, $\overline{M}_n$ of at least 7,000, and a weight average molecular weight, $\overline{M}_w$, of less than 100,000.

The number average molecular weights and the weight average molecular weight can be varied by methods known to those skilled in the synthetic polymer chemistry art. For example, the molecular weights can be decreased by increasing the amount of initiator used, increasing the amount of chain transfer agent used, decreasing the monomer concentration, and increasing the reaction temperature. They can also be varied by selection of the particular chain transfer agent and/or initiator.

Also preferred is an electrophoresis element comprising both a resolving gel and a stacking gel. The resolving gel comprises a first copolymer as described above wherein the molecular weight, $\overline{M}_w$, is less than 100,000 and the $\overline{M}_n$ is at least 7,000, and the stacking gel comprises a second copolymer as described above wherein the molecular weight, $\overline{M}_w$ is greater than 100,000 and the $\overline{M}_n$ is greater than 50,000.

For compatibility, the monomers from which the stacking gel copolymer is made should be the same as, or similar to, those used for the resolving gel. Preferably, acrylamide comprises at least 90 mole percent of the monomer mix. Consequently, the molecular weights, $\overline{M}_n$ and $\overline{M}_w$, of the stacking gel copolymers must be significantly greater than those of the corresponding resolving gel copolymers as described above.

The rate of gelation can be expected to increase as (a) the concentration of copolymer in the gel, (b) the molecular weight of the starting copolymer (particularly $\overline{M}_w$), (c) the number of crosslinking sites present per gram of copolymer, and (d) the pH of the solution, increase.

A polymer of the present invention useful as a stacking gel has an $\overline{M}_n$ of at least 50,000 and an $\overline{M}_w$ of at least 100,000, preferably of an $\overline{M}_w$ of at least 150,000, and more preferably at least 200,000 or 300,000.

A preferred polymer, poly[acrylamide-co-N-(3-chloroacetamidopropyl) methacrylamide] (weight ratio of acrylamide to comonomer: 90/10; mole ratio: 96.5/3.5), preferably has the following molecular weights when used for both purposes:

| | $\overline{M}_n$ | $\overline{M}_w$ |
|---|---|---|
| Resolving Gel ($G_R$) | > 0.7($10^4$) | < 10.0($10^4$) |
| Stacking Gel ($G_S$) | > 5($10^4$) | > 10.0($10^4$) |

As indicated earlier, these preferred molecular weights should be similar for any other copolymers of the structure noted above that are crosslinked similarly. This is because: 1) the bulk of the polymer composition is derived from acrylamide or modestly substituted acrylamides, 2) the fraction of crosslinking sites per molecule should be similar, and 3) the molecular weight of polymer backbone between crosslinks should also be similar. It is expected, therefore, that the preferred polymers of the invention for forming resolving gels should have an $\overline{M}_n$ of 7,000 to 30,000 and an $\overline{M}_w$ of about 25,000 to 100,000; and those preferred for forming stacking gels should have an $\overline{M}_n$ of 50,000 to 300,000 and an $\overline{M}_w$ of 100,000 to 1,000,000.

Regarding the number of crosslinking sites present on the polymer, the crosslinking reactions should ideally be done using equal equivalent (that is, stoichiometric) amounts of reactive crosslinking agent and sites on the polymer. However, we have found it advantageous to use 25-50% more dithiothreitol (or other suitable crosslinking agent) on a chemical equivalency basis than there are crosslinking sites present. The benefits of using 1.25 to 1.5 times the just-required stoichiometric amount of crosslinking agent are (a) better overall crosslinking as manifested by lower degrees of gel swell in high purity water, and (b) assurance that most (if not all) of the electrophilic groups have been reacted. Unreacted electrophilic groups at potential crosslinking sites could react with nucleophilic groups on proteins and thereby confound the electrophoretic separation process.

The number of equivalents of crosslinking sites per gram of polymer can be varied by adjusting the concentration of monomer(s) containing the reactive $R^{2'}$ groups shown in the copolymer structure above.

In still another embodiment of the invention, the copolymer of the present invention is a component of a kit for electrophoresis comprising the copolymer described in detail above or a combination of more than one copolymer as described above, and in a container separate from the copolymer(s), a suitable crosslinking agent, more particularly described above, for crosslinking the copolymer by a reaction that does not involve a free-radical vinyl addition mechanism. Optionally, the kit may also contain a selected buffer and other suitable ingredients for incorporation into the electrophoresis medium.

In still another embodiment of the invention, there is provided a method of preparing an electrophoresis gel for the separation of large molecules in situ comprising mixing an aqueous solution of a copolymer as described above with a crosslinking agent as described above that will react with crosslinkable sites on the copolymer by a reaction with a selected crosslinking agent that does not involve a free-radical vinyl addition mechanism.

The rate of gelation can be expected to increase as (a) the concentration of copolymer in the gel, (b) the molecular weight of the starting copolymer (particularly $\overline{M}_w$), (c) the number of crosslinking sites present per gram of copolymer, and (d) the pH of the solution, increase.

Typically, concentration of the preformed polymer will be from about 8 to about 14%, preferably 10 to 12%, (w/v) for the resolving gel and from about 1.5 to about 6%, preferably 2 to 5%, more preferably 2.5 to 4% (w/v) for the stacking gel. For example, the preferred polymer, poly[acrylamide-co-N-(3-chloroacetamidopropyl)methacrylamide] (weight ratio of acrylamide to comonomer: 90/10; mole ratio; 96.5/3.5), is employed at a concentration of about 12% to make a resolving gel, and about 4% to make a stacking gel. However, to ensure gel formation, the molecular weights $\overline{M}_n$ and $\overline{M}_w$ are both higher in the stacking gel polymer than in the resolving gel polymer.

Preparation of N-(3-Chloroacetamidopropyl)methacrylamide a preferred monomer useful in the practice of this invention:

In a 3-liter 4-neck flask fitted with condenser, stirrer, and 2-dropping funnels were placed N-(3-aminopropyl)methacrylamide hydrochloride (157 g 0.88 moles) in methanol (1.2 ℓ) and 2,6-di-tert-butyl-p-cresol (1.0 g). In one funnel was placed chloroacetyl chloride (100 g, 0.89 mole), and in funnel two was placed triethylamine

(178 g, 1.76 mole). The solution was cooled to 0-5°C (ice-methanol), and triethylamine was added in a slow stream over 30 minutes, and the chloroacetyl chloride was added over 1 hour. After the addition, the temperature was maintained at O°C for 2 hours, the ice bath was removed, and stirring was continued at room temperature overnight. The solvent was removed, and to the residue was added hot ethyl acetate (500 mℓ). The mixture was filtered to remove triethylamine hydrochloride, then the solid was washed with hot ethyl acetate (500 mℓ), filtered again, the filtrate combined, and the solvent was removed on a rotory evaporator. The residue was crystallized from ethyl acetate (400 mℓ) by heating to dissolve, filtering to remove any solid present, and cooling to 0°C to crystallize. The crude monomer was purified by chromatography on a silica gel packed column. The product was eluted from the column using a 1:1 mixture of ethyl acetate and dichloromethane (4 ℓ). The collected solvent was evaporated, and the residue crystallized from ethyl acetate (300 mℓ) with 2,6-di-tert-butyl-p-cresol (500 mg) to give a white crystalline compound, mp 85-90°C, 83 g (43% yield). Anal. Calc'd for

$C_9H_{15}ClN_2O_2$: C, 49.4; H, 6.9; N, 12.8; cl, 16.2. Found: C, 49.0; H, 7.6; N, 13.2; Cl, 17.3.

The following examples illustrate the practice of this invention:

Example 1:

Preparation of Poly[acrylamide-co-N-(3-chloroacetamidopropyl)methacrylamide] (weight ratio 95/5).

To a mixture of acrylamide (electrophoresis grade) (34.2 g, 0.48 mole) and N-(3-chloroacetamidopropyl)methacrylamide (1.8 g, 0.008 mole) in tert-butanol (400 mℓ) and isopropanol (40 mℓ), maintained under a nitrogen atmosphere, was added 2,2'-azobis(2-methylpropionitrile) (1.0 g). The solution was heated to 70°C for 6 hours (the polymer precipitates from solution after 10 minutes). The polymer was then filtered, washed with methanol (2ℓ), acetone (2ℓ), sucked dry and placed in a vacuum oven at 35°C overnight to give a white powder; 36 g 100% yield. The polymer had an inherent viscosity of 0.42 dℓ/g in a 1.0 molar sodium chloride solution measured at a concentration of 0.25 g/dL. Anal. Calc'd for $C_{3102}H_{5170}Cl_{17}N_{1017}\,0_{1017}$: C, 50.35, H, 7.04; N, 19.53; Cl, 0.76.

Found: C, 48.3; H, 7.12; N, 18.18; Cl, 0.85.

Other polymers of the same family were prepared by varying the weight proportions of acrylamide and 3-chloroacetamidopropyl methacrylamide.

Example 2:

Alternate Preparation of Poly[acrylamide-co-N-(3-chloroacetamidopropyl)methacrylamide] (weight ratio 95/5).

This preparation employs a water/isopropyl alcohol solvent system instead of a t-butanol/isopropyl alcohol system.

A mixture of 68.4 g of acrylamide, 3.6 g of N-(3-chloroacetamidopropyl)methacrylamide, 600 mℓ of Milli Q water, 200 mℓ of isopropyl alcohol, and 4 g of 2,2'-azobis(2-methylpropionitrile) was placed in a 1000 ℓ flask, purged with nitrogen gas for 10 minutes, and placed in a 63°C constant temperature bath while stirring mechanically. After about 7 hrs. and 25 minutes, the flask was removed from the bath and allowed to cool overnight. The polymer product was precipitated by pouring into 4 ℓ of acetone with stirring. The solvent was removed by filtration, the solid washed with 4 ℓ of methanol, collected, washed again with 4 ℓ of acetone, collected again on a filter, and dried overnight under vacuum.

Example 3:

Description of Use of Copolymers for SDS Electrophoresis.

1. Stock Solutions

a. A 21.8% stock solution of the 95:5 poly[acrylamide-co-N-(3-chloro-acetamidopropyl)methacry lamide] was made by dissolving 21.8 g in high purity, deionized water (Milli Q) to a final volume of 100 mℓ.

b. a 22.5% stock solution of the 80:20 poly[acrylamide-co-N-(3-chloro-acetamidopropyl) methacrylamide] was made by dissolving 20 g in high purity, deionized water (Milli Q) to a final volume of 100 mℓ.

2. Preparation of 15% Resolving Gel

To cast a 15 T gel (containing 15% by weight of the copolymer), 6.88 mℓ of stock solution A representing [(1.5)(.05)/218]0.000344 chemical equivalents of N-(3-chloroacetamido-propyl) methacrylamide was mixed with 0.05 mℓ of 20% sodium dodecyl sulfate (SDS), 1X equivalent of crosslinker (dithiothreitol), and the necessary volume of water to bring the total volume to 7.50 mℓ. After this solution is completely mixed, the solution is taken to a final volume of 10.0 mℓ with 2.5 mℓ of Tris-HCl, 1.5 molar, pH 8.8. The buffer is added last since the crosslinking is pH dependent, and, if the buffer is added before the crosslinking agent,

the gelation occurs too quickly. After adding the buffer, and mixing thoroughly, the mixture is poured between two glass plates, separated by a 0.075 cm slot, on a gel casting stand that had been previously set up. The mixture is poured within 1.5 minutes after adding the buffer, and the gel is completely poured within 5 minutes. After approximately 20 minutes, gelation begins and continues until the gel is firm.

If a stacking gel is to be used, step 3 is followed. If a stacking gel is not used, the Teflon comb to form wells is inserted between the glass plates after the gel solution has been poured and kept there until the gel is firm.

3. Preparation of 5% Stacking Gel

After the a 15% T resolving gel was firm, a 5% stacking gel was layered over it. The 5% stacking gel was made by adding 2.2 mℓ of stock solution B representing t(.5)(.2)/218]0.000459 chemical equivalents of N-(3-chloroacetamidopropyl)methacrylamide. To this was added 0.05 mℓ of 20% sodium dodecyl sulfate, 0.83 mℓ Tris-HCl (pH 6.8, 1.5 M), 1X equivalents of dithiothreitol, and high purity, deionized water (Milli Q) to a final volume of 10 mℓ. After thorough mixing, this was overlaid on the 15% resolving gel, and a Teflon comb was inserted to form the stacking gel and loading wells for samples. The stacking gel became firm after approximately 6 hours.

4. Gel Electrophoresis Conditions

After the gel had been formed from part 2 (and part 3 if a stacking gel is used), the gel was used for a poly(acrylamide) gel electrophoresis experiment in the presence of sodium dodecyl sulfate and denatured proteins (SDS-PAGE).

The experimental conditions include:

a. Protein standards purchased from Bio-Rad Laboratories identified as high-molecular-weight and low-molecular-weight standards (c/n 161-0303 and 161-0304, respectively) that were dissolved in Tris-HCl, ph 6.5 (final concentration of 0.063 molar), sodium dodecyl sulfate, bromophenol blue tracking dye, and 2-mercaptoethanol (final concentration of 0.2%, 0.001%, and 5%, respectively) with glycerol added as a weighing agent to help concentrate the dissolved samples to the bottom of the sample well. Before the samples were loaded, the standards were heated at 95°C for 5 minutes to denature the proteins.

b. The electrode running buffer was Tris/glycine/SDS as described by U. K. Laemmli (Nature, 227:680, 1970), specifically 0.025 molar Tris, pH 8.8, 0.19 molar glycine, and 0.1% SDS.

c. The Teflon combs were removed from the gel (stacking gel if one is used) and an appropriate volume of standards from paragraph (4a) above were added so the final protein concentration of high-molecular-weight standards was 7.5 μg (or 1.5 μg/protein standard) and 9.0 μg of low-molecular-weight standard (or 1.5 μg/protein standard). The high-molecular-weight standard contained 5 proteins each having different molecular weight, and the low-molecular-weight standard had 6 proteins each having a different molecular weight. The actual equipment used was the Hoefer model SE 250 vertical slab gel cell (San Francisco, CA 94107), and the procedure was described in the manual accompanying the Mini Protein II Dual Slab Gel (Electrophoresis) Cell sold by Bio-Rad Laboratories, Richmond, CA 94804.

d. The electrical parameters for the experiment were 100 volts, constant during the course of the experiment. The experiment was stopped when the bromophenol blue tracking dye was at the bottom of the gel, which was after approximately 2.3 hours under these conditions.

After the electrophoresis was completed, the gel was removed from the plates, and stained with 0.05% Coomassie Blue R250 dye solution containing acetic acid (10%), methanol (40%), and water (50%) for a minimum of 30 minutes. The dye preferentially absorbs to the protein-rich areas, giving dark protein bands (after destaining with 10% acetic acid, 40% methanol, and 50% water) that leaves no doubt that the electrophoretic migration had taken place according to molecular size with good resolution. A graph of the migration distances (corrected for swelling due to destaining) plotted as abscissae and the logarithm molecular weights plotted as ordinates was nearly linear which is what one typically observes for SDS-PAGE. Thus, the gel medium provided results very similar to those obtained in SDS-PAGE gels made from acrylamide/bis polymerization.

## Example 4

Preparation of electrophoresis gel.

An electrophoresis gel was made with poly[acrylamide-co-N-(3-chloroacetamidopropyl)methacrylamide] (weight ratio of acrylamide to comonomer: 90/10; mole ratio: 96.5/3.5) copolymers disclosed herein. This gel included a lower resolving gel made from poly[acrylamide-co-N-(3-chloroacetamidopropyl)methacrylamide] (weight ratio of acrylamide to comonomer: 90/10; mole ratio, 96.5/3.5) of $\overline{M}_n$ = 17.8 ($10^3$) and $\overline{M}_w$ = 78.2 ($10^3$) and a stacking gel from a poly[acrylamide-co-N-(3-chloroacetamidopropyl)methacrylamide] (weight ratio of acrylamide to comonomer, 90/10, mole ratio 96.5/3.5) of Example 2 [$\overline{M}_w \simeq$ 500 ($10^3$)].

The molecular weight averages of the acrylamide/N-(3-chloroacetamidopropyl)methacrylamide copolymers were estimated using an aqueous gel permeation chromatography system in which (a) the fractionation was accomplished with four TSK-GEL (type PW) columns of 6000, 5000, 3000 and 2000 Angstrom permeability limits (Altex Scientific, 1780 Fourth St., Berkeley, CA 94710), (b) the eluent was 0.05 M $Na_2SO_4$ in 5% ethylene glycol in water (v/v), (c) the calibrating standards were Shodex STANDARD P-82 polysaccharides of 853, 380, 186, 100, 48.0, 23.7, 12.2 and 5.8 ($10^3$) (Showa Denko K.K., 280 Park Ave., 27th Floor West Building, New York, NY 10017) used at 0.1% (w/v) concentration, (d) the flow rate was 1.5 ml/min and (e) the detection of solute in the column effluent was done refractometrically.

Each copolymer was crosslinked with dithiothreitol used at 125% of the stoichiometric amount based on the number of crosslinking sites present. The pH of, and buffers used in, the gels and the electrode chambers are summarized in Table I.

Table I

| Location | pH | Buffer Composition |
|---|---|---|
| Cathode | 8.3 | 0.025 molar Tris, 0.192 molar glycine, 0.1% SDS |
| Stacking gel (4% polymer) | 7.8 | 0.125 molar Tris•HCl |
| Resolving gel (12% polymer) | 9.4 | 0.375 molar Tris•HCl |
| Anode | 8.3 | same as cathode except SDS was omitted and 0.1 M sodium acetate beneficially added (These variations from cathode conditions are optional.) |

Tris = Tris(hydroxymethyl)aminomethane
SDS = sodium dodecyl sulfate

In electrophoresis experiments conducted according to the Laemmli procedure with the buffer compositions given in Table I, the dithiothreitol crosslinked poly[acrylamide-co-N-(3-chloroacetamidopropyl)methacrylamide] (weight ratio of acrylamide to comonomer: 90/10; mole ratio 96.5/3.5) copolymers of the present invention perform comparably to gels prepared from acrylamide and N,N'-methylenebisacrylamide. Specifically, the gels prepared from copolymers of this invention permit good electrophoresis separations, with SDS-complexed proteins with molecular weights from about 14.4 ($10^3$) to about 200 ($10^3$) appearing at the anode and cathode ends of the gel, respectively, after electrophoresis under conditions of voltage and time ordinarily used by those skilled in the art of electrophoresis for SDS-PAGE electrophoresis on acrylamide/bis gel media. Not only is the degree of separation comparable to that achieved with acrylamide/bis-based gels but the sharpness of the separated bands is also very good. These results can be achieved with gels in the so-called "mini" format (0.15 cm x 7 cm x 8 cm) (thickness x height x width) and in the popular larger format (0.15 cm x 16 cm x 14 cm).

Example 5

Preparation of a low molecular weight copolymer with an adequate level of crosslinking site to form a resolving gel in about four minutes.

To a 60°C solution of 2,2'-azobis(methylpropionitrile) (1.0 g) in Milli Q water (i.e., water purified with a Millipore C/N ZD40115-84 unit) (200 mℓ), isopropanol (20 mℓ) and conc. sulfuric acid (0.5 g), which had been purged with nitrogen, was added the following solution, which also had been purged with nitrogen: electrophoresis grade acrylamide (64.8 g; 0.91 moles), N-(3-chloroacetamidopropyl)methacrylamide (7.2 g, 0.033 moles), Milli Q water (600 mℓ), and isopropanol (60 mℓ), the chain transfer agent. This was added to the first solution dropwise and under nitrogen over a 2-hour period. After the addition was complete, the resultant solution was held for 5 hours more at 60°C and then allowed to stand at ambient temperature overnight. The next day the solution was concentrated at 40°C on a rotary evaporator to a volume of about 500 mℓ. The concentrated solution was then added to 8 liters of reagent grade methanol, with stirring, to precipitate the copolymer. The precipitate was filtered and washed in an additional 4 liters of reagent grade methanol, then dried in a vacuum oven with a nitrogen bleed at 30-35°C. The yield was 95% based on the original recipe. The inherent viscosity of the copolymer, as determined with a 0.25% solution of the copolymer in aqueous 1.0 molar NaCl at 25°C, was 0.35 dl/g. Cl analysis: theory, 1.55%; found 1.46%. Molecular weight analysis by aqueous size exclusion chromatography showed $\overline{M}_n = 1.51(10^4)$ and $\overline{M}_w = 9.41(10^4)$.

A polymer solution cast from a 12% solution of this copolymer at pH 9.4 began to gel (to a resolving gel) four minutes after addition of the crosslinker (dithiothreitol - 44.2 mg per gram of copolymer).

In this and the following examples, the molecular weight averages of the acrylamide/N-3-chloroacetamidopropyl)methacrylamide copolymers were estimated using an aqueous gel permeation chromatography system in which (a) the fractionation was accomplished with four TSK-GEL (type PW) columns of 6000, 5000, 3000 and 2000 Angstrom permeability limits (Altex Scientific, 1780 Fourth St., Berkeley, CA 94710), (b) the eluent was 0.05 molar $Na_2SO_4$ in 5% ethylene glycol-in-water (v/v), (c) the calibrating standards were Shodex STANDARD P-82 polysaccharides of 853, 380, 186, 100, 48.0, 23.7, 12.2 and 5.8 kDa (Showa Denko K.K., 280 Park Ave., 27th Floor West Building, New York, NY 10017) used at 0.1% (w/v) concentration, (d) the flow rate was 1.5 ml/min and (e) the detection of solute in the column effluent was done refractometrically.

## Example 6

Preparation of a high molecular weight copolymer with adequate crosslinking site level for forming gels in approximately 40 minutes.

To a 50°C solution of $(NH_4)_2S_2O_8$ (0.75 g) and $NaHSO_3$ (0.0375 g) in deionized water which had been purged of dissolved oxygen by bubbling with nitrogen, was added dropwise in a nitrogen atmosphere over 2 hours the following solution: electrophoresis grade acrylamide (64.8 g; 0.91 moles), N-(3-chloroacetamidopropyl)methacrylamide (7.2 g, 0.033 moles), and $NaHSO_3$ (0.225 g) in deionized water (300 ml). The resultant solution was held at 50°C for an additional hour after the addition of the monomer-containing solution was finished. Then 250 mℓ more of deionized water were added with stirring. The copolymer was precipitated by adding the above solution to 8 liters of reagent grade methanol. The precipitate was filtered, washed and dried (oven at 30-35°C). The yield based on the original recipe was 100% and the inherent viscosity of a 0.25% solution of the copolymer in aqueous 1.0 molar NaCl was 1.13 dl/g, which indicates a very high molecular weight copolymer. Cl analysis: theory, 1.55%, found, 1.40%. When a gel is cast from a 4% solution of this copolymer at a pH of 7.8 using dithiothreitol as the crosslinker (44.2 mg per gram of copolymer), gelation occurs 40 minutes after crosslinker addition.

## Example 7

a) Synthesis of high molecular weight copolymer for very low polymer content gels.

Into a reaction vessel held at 50°C which initially contained a nitrogen-purged solution of 1.5 gram ammonium persulfate dissolved in 400 ml high purity water, were pumped (i) a (previously nitrogen-purged) solution of 259.2 grams of electrophoresis grade acrylamide, 28.8 grams of N-(3-chloroacetamidopropyl)methacrylamide, and 1200 ml of high purity water and (ii) another (nitrogen-purged) solution of 0.525 g sodium bisulfite and 10 ml of high purity water. Solutions (i) and (ii) were added to the reaction vessel over a period of 41 minutes and the combined solutions were held for four hours at 50°C, after which the reaction mixture was permitted to cool to room temperature. Before further use, an additional 500 ml of high purity water were added to this solution, with thorough mixing, to yield a solution that contained 12.5 to 13% (w/v) high molecular weight copolymer.

b) Forming a gel for DNA electrophoresis.

To form a gel of very low [2.5% (w/v)] polymer concentration, 1.88 ml of the final solution from Example 7a, 0.5 ml of concentrated buffer [0.2 moles tris(hydroxymethyl)aminomethane (hydroxymethyl aminomethane), 0.022 moles boric acid, 0.002 moles ethylenediamine tetraacetic acid and enough high purity water to make 100 ml of solution), 7.59 ml high purity water, 5 microliters of ethidium bromide in water solution (1 mg dye per ml solution) and 26.5 microliters of dithiothreitol in water solution (0.5 g/ml) were mixed well and poured into a shallow plastic tray, the ends of which had been taped in order to contain the copolymer solution. Just after pouring, a multi-toothed plastic well former was inserted into the gel perpendicular to the plane of the gel and perpendicular to the direction of electrophoresis. This assembly was permitted to stand in a covered container (so as to retard evaporation of water) for three hours, after which the gel was

overlaid with a buffer solution made by a twenty-fold dilution of the concentrated buffer solution previously described. Then the plastic lane former was carefully removed and the tray (from which the tape at each end was also removed) was inserted into a horizontal electrophoresis cell, to which diluted buffer was added so that the face of the gel was one mm under the surface of the buffer. Then solutions of undenatured DNA fragments (double-stranded DNA) were loaded into the wells. Electrophoresis at 100V (voltage gradient 10 V/cm) for 73 minutes yielded good sample separation and resolution from 123 to at least 1434 base pairs.

Example 8

a) Scaled-up synthesis of high molecular weight copolymer for very low polymer content gels.

Into a 20 gallon capacity reaction vessel which initially contained a solution of 60.64 grams of ammonium persulfate dissolved in 25,000 grams of deionized (high purity) water, that had been and was continuously being purged with nitrogen, was thermostated at 50°C and was stirred at 112-120 rpm, were pumped two solutions: (i) starting at time 0 and ending 76 minutes later, a solution of 21.22 grams of sodium bisulfite dissolved in 404.3 grams of deionized water, (ii) starting at time one minute and ending 74 minutes later, a solution of 10,479 grams of acrylamide and 1,164 grams of N-(3-chloroacetamidopropyl)methacrylamide dissolved in 34,953 grams of deionized water that had been purged with nitrogen and was kept under a nitrogen atmosphere. Solutions (i) and (ii) were at ambient temperature (ca 25°C) before being added to the reaction but on addition to the well-thermostated reactor rapidly warmed to 50°C. As these solutions were added, the viscosity of the reactor solution rose, indicating the formation of a high polymer. After 235 minutes, approximately 15,000 more grams of deionized water at 25°C were added, with stirring, to the reactor, and the reactor was allowed to cool. The final solution of copolymer in high purity water was 14.3% (w/w), and an aliquot of this solution was the stock solution for the gel made in Example 8b. An assay for the Cl content of the copolymer itself found 1.44% (weight basis) as compared to 1.55% theoretical, indicating that the N-(3-chloroacetamidopropyl)methacrylamide had been well incorporated into the acrylamide-rich chains.

The average molecular weights of this particular acrylamide/N-(3-chloroacetamidopropyl)methacrylamide copolymer were estimated at number average, $\overline{M}_n = 8.47(10^4)$, and weight average, $\overline{M}_w = 20.2(10^4)$, using an aqueous gel permeation chromatography system in which (a) the fractionation was accomplished with BioGel TSK 60-XL, TSK 50-XL, TSK 30-XL and SEC 20-XL columns (Bio Rad Laboratories, 220 Maple Ave., Rockville Centre, NY 11571), (b) the eluent was 0.05 M $Na_2SO_4$ in 5% ethylene glycol-in-water (v/v), (c) the calibrating standards were poly(ethylene oxide) samples of known molecular weights ranging from 950 kDa down to 1.06 kDa (Scientific Polymer Products, 6265 Dean Parkway, Ontario, NY 14519), (d) the flow-rate was 1.0 ml/min and (e) the detection of solute in the effluent was done refractometrically.

b) Forming a gel for DNA electrophoresis.

Using the chemicals and procedures summarized in Example 7b above, a 3% (w/v) electrophoresis gel was made and used to separate undenatured DNA fragments. Excellent separation and resolution were achieved over the range of 72 to 2,674 base pairs.

## Claims

1. A water-soluble copolymer characterized wherein it has the structure

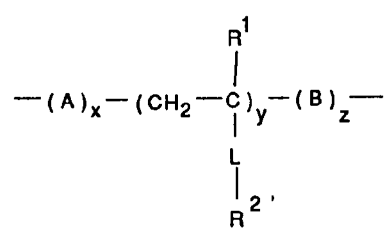

wherein L is substituted or unsubstituted alkylene, having 1 to 20 carbon and heteroatoms in the backbone, substituted or unsubstituted arylene having 6 to 12 nuclear carbon atoms, a divalent heteroatom or heteroatom-containing group,

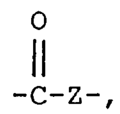

or a combination of two or more thereof, wherein Z is a divalent heterocyclic group having 5 to 7 nuclear carbon and heteroatoms,

-A- represents recurring units derived from one or more polymerized acrylamide monomers, $R^1$ is hydrogen or methyl, $R^{2'}$ is a haloacetamido group, -B- represents recurring units derived from any other polymerized vinyl monomers, and x, y, and z represent weight percents of the recurring units, x being 50-95 weight percent, y being 1-50 weight percent, and z being 0-45 weight percent, provided that the copolymer does not contain recurring units derived from N-(3-chloroacetamidopropyl) methacrylamide, 2-chloroacetamidoethyl methacrylate, 4-chloroacetamidostyrene, m- and p- chloroacetamidomethylstyrene, N-(3-chloroacetamidocarbonyliminopropyl) methacrylamide, 2-chloroacetamidocarbonyliminoethyl methacrylate, 4-chloroacetamidocarbonyliminostyrene, and m- and p-chloroacetamidocarbonyliminomethylstyrene.

2. The copolymer as claimed in claim 1 wherein L is an $-(R^3)_k-$ $(COXR_4)_m$ - $(NHCO)_n$ - group where $R^3$ is arylene or arylene-$R^4$- wherein $R^4$ is alkylene of 1 to 6 carbon atoms, X is -0- or -NH-, and k, m, and n are each 0 or 1, provided that k is 0 when m is 1, and m is 0 when k is 1.

3. The copolymer as claimed in either of claims 1 and 2 wherein L is phenylene or phenylenemethylene.

4. The copolymer as claimed in any of claims 1 to 3 wherein -A- represents recurring units derived from one or more of acrylamide, N-isopropylacrylamide and 2-acrylamido-2-hydroxymethyl-1,3-propanediol, N-isopropylacrylamide, N-hydroxymethylacrylamide, N-(1,1-dimethyl-3-oxo-butyl)acrylamide, N-methylmethacrylamide, 2-acryl-amido- 2-hydroxymethyl-1,3-propanediol, methacrylamide, 3-(3-dimethylaminopropyl)acrylamide, N,N-dimethylacrylamide, N,N-diethylacrylamide, N-isopropylmethacrylamide, and 3-(2-dimethylaminoethyl)acrylamide.

5. The copolymer as claimed in any of claims 1 to 4 wherein -A- represents recurring units derived from acrylamide.

6. The copolymer as claimed in any of claims 1 to 5 wherein -B- represents recurring units derived from one or more styrene or styrene derivatives, divinyl, diacrylic and diacrylamide monomers.

7. The copolymer as claimed in any of claims 1 to 6 wherein -B- represents recurring units derived from divinylbenzene, ethylene diacrylate, ethylene dimethacrylate or N,N'-methylenebisacrylamide.

8. A water-soluble copolymer characterized wherein it has the structure

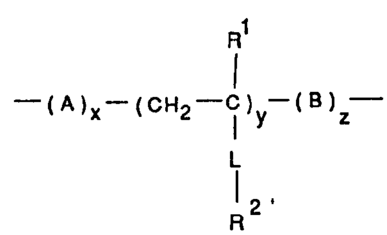

wherein L is substituted or unsubstituted alkylene, having 1 to 20 carbon and heteroatoms in the backbone, substituted or unsubstituted arylene having 6 to 12 nuclear carbon atoms, a divalent heteroatom or heteroatom-containing group,

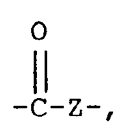

or a combination of two or more thereof, wherein Z is a divalent heterocyclic group having 5 to 7 nuclear

carbon and heteroatoms,

-A- represents recurring units derived from one or more polymerized acrylamide monomers, $R^1$ is hydrogen or methyl, $R^{2'}$is a haloacetamido group, -B- represents recurring units derived from any other polymerized vinyl monomers, and x, y, and z represent weight percents of the recurring units, x being a 50-95 weight percent, y being 1-50 weight percent, and z being 0-45 weight percent, said copolymer being useful for making an electrophoresis medium for the electrophoretic separation of large molecules by crosslinking by a reaction with a selected crosslinking agent that does not involve a free-radical vinyl addition mechanism, the copolymer being derived from a minor proportion of the haloacetamido comonomer that contains a site for the crosslinking reaction with the selected crosslinking agent, the copolymer further having a $M_n$ greater than 50,000 and a $M_w$ greater than 100,000.

**9.** A water-soluble copolymer characterized wherein it has the structure

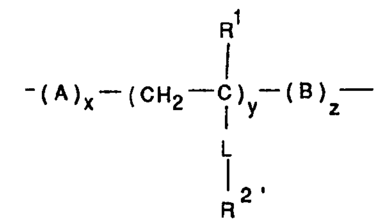

wherein L is substituted or unsubsituted alkylene, having 1 to 20 carbon and heteroatoms in the backbone, substituted or unsubsituted arylene having 6 to 12 nuclear carbon atoms, a divalent heteroatom or heteroatom-containing group,

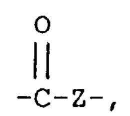

or a combination of two or more thereof, wherein Z is a divalent heterocyclic group having 5 to 7 nuclear carbon and heteroatoms,

-A- represents recurring units derived from one or more polymerized acrylamide monomers, $R^1$ is hydrogen or methyl, $R^{2'}$is a haloacetamido group, -B- represents recurring units derived from any other polymerized vinyl monomers, and x, y, and z represent weight percents of the recurring units, x being 50-95 weight percent, y being 1-50 weight percent, and z being 0-45 weight percent, said copolymer being useful for making an electrophoresis medium by crosslinking by a reaction with a selected crosslinking agent that does not involve a free-radical vinyl addition mechanism, the copolymer being derived from a minor proportion of the halocetamido comonomer that contains a site for the crosslinking reaction with the selected crosslinking agent, the preformed copolymer further having the following properties:

1) $M_w$ is such that the addition of 1.25 to 1.5 times the stoichiometric amount of the selected crosslinking agent will not raise the viscosity of the mixture so much that the medium cannot be poured into a 0.15 x 14 x 14 cm mold within 4 to 10 minutes after addition of the crosslinking agent, and

2) $M_n$ is such as to provide a crosslink density sufficient to form a gel after about 10 minutes after addition of 1.25 to 1.5 times the stoichiometric amount of the selected crosslinking agent, the gel ultimately having sufficient integrity within 2 hours after pouring to be removed from the mold and handled gently without tearing or falling apart.

**10.** The copolymer as claimed in claim 9 having a number average molecular weight, $M_n$, of at least 7,000 and a weight average molecular weight, $M_w$, of less than 100,000.

**11.** The copolymer as claimed in either of claims 9 and 10 wherein the $M_w$ is such that the addition of the crosslinking agent will not raise the viscosity so much that the medium cannot be poured into the mold within 6 to 8 minutes after the addition.

**12.** The copolymer as claimed in any of claims 9 to 11 wherein the number of equivalents of crosslinking sites per gram of the copolymer is in the range of $0.45(10^{-4})$ to $14(10^{-4})$.

**13.** A method of preparing an electrophoresis gel in situ comprising mixing an aqueous solution of a copolymer as claimed in any of claims 1 through 12, with a selected crosslinking agent that will react with crosslinkable sites on the copolymer by a reaction with the selected crosslinking agent that does not involve a free-radical vinyl addition mechanism.

**14.** An electrophoresis element characterized in that it comprises a crosslinked gel prepared by the method claimed in claim 13.

**15.** The use of the copolymer as claimed in either of claims 9 and 10, after crosslinking with said crosslinking agent, as a resolving gel.

**16.** The use of the copolymer as claimed in claim 8, after crosslinking with said crosslinking agent, as a stacking gel.

**17.** An electrophoresis element which comprises a resolving gel and a stacking gel,

the element characterized wherein the resolving gel comprises a first copolymer as claimed in either of claims 9 and 10, and,

the stacking gel comprises a second copolymer as claimed in claim 8,

with each copolymer having been prepared as a crosslinked gel by the method claimed in claim 13.

**18.** The element as claimed in claim 17 wherein the resolving gel is prepared using an aqueous solution of the first copolymer which is present in a concentration of from 8 to 14% w/v, and the stacking gel is prepared using an aqueous solution of the second copolymer which is present in a concentration of from 1.5 to 6% w/v.

**19.** A kit for electrophoresis characterized as comprising the copolymer as claimed in any of claims 1 through 12, or a combination of the copolymer as claimed in any of claims 1 through 12, and in a container separate from the copolymer(s), a crosslinking agent for crosslinking the copolymer by a reaction that does not involve a free-radical vinyl addition mechanism.

**20.** A method, element, use or kit as claimed in any of claims 13 and 14 to 19 wherein the copolymer is crosslinked with a crosslinking agent which is a compound having two or more amino, mercapto or phenolic hydroxy reactive groups.

**21.** A method, element, use or kit as claimed in any of claims 13 and 14 to 20 wherein the crosslinking agent is a bis mercaptan having in its backbone chain the

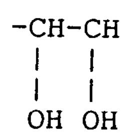

group.

**22.** A method, element, use or kit as claimed in any of claims 13 and 14 to 20 wherein the crosslinking agent is ethylenediamine, 1,3-propanediamine, 1,3-propanedithiol, dithioerythreitol, dithiothreitol, 1,5-pentanediamine, hexamethylenediamine, diethylenetriamine, triethylenetetramine, propylenediamine, di(aminomethyl)ether, 1,8-diamino-4-(aminomethyl) octane, xylylenediamine, hydroquinone, bisphenol A, bisphenol sulfone, 1,4-butanedisulfinic acid, benzenedisulfinic acid, thioethanolamine, p-aminothiophenol or butylenediamine.

**23.** A method, element, use or kit as claimed in any of claims 13 and 14 to 20 wherein the crosslinking agent is dithiothreitol or dithioerythreitol.

**Patentansprüche**

1. Wasserlösliches Copolymer gekennzeichnet durch die Struktur

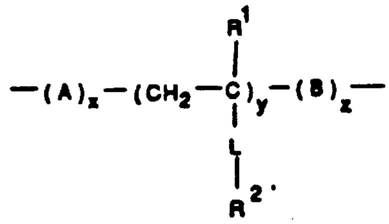

worin bedeuten: L einen substituierten oder unsubstituierten Alkylenrest mit 1 bis 20 Kohlenstoff- und Heteroatomen in der Kette, einen substituierten oder unsubstituierten Arylenrest mit 6 bis 12 Kernkohlenstoffatomen, ein divalentes Heteroatom oder eine ein Heteroatom enthaltende Gruppe,

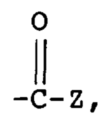

oder eine Kombination von zwei oder mehreren hiervon, wobei Z für eine divalente heterocyclische Gruppe mit 5 bis 7 Kernkohlenstoff- und Kernheteroatomen steht,
-A- wiederkehrende Einheiten, die sich von einem oder mehreren polymerisierten Acrylamidmonomeren ableiten, $R^1$ ein Wasserstoffatom oder eine Methylgruppe, $R^{2'}$ eine Haloacetamidogruppe, -B- wiederkehrende Einheiten, die sich von beliebigen anderen polymerisierten Vinylmonomeren ableiten, und x, y und z Gewichtsprozente der wiederkehrenden Einheiten, wobei x für 50 bis 95 Gew.-% steht, y für 1 bis 50 Gew.-% und z für 0 bis 45 Gew.-%, wobei gilt, daß das Copolymer keine wiederkehrende Einheit aufweist, die sich ableitet von N-(3-Chloroacetamidopropyl)methacrylamid; 2-Chloroacetamidoethylmethacrylat; 4-Chloroacetamidostyrol, m- und p- Chloroacetamidomethylstyrol; N-(3-Chloroacetamidocarbonyliminopropyl)methacrylamid; 2-Chloroacetamidocarbonyliminoethylmethacrylat; 4-Chloroacetamidocarbonyliminostyrol, und m- and p- Chloroacetamidocarbonyliminomethylstyrol.

2. Copolymer nach Anspruch 1, in dem L für eine $-(R^3)_k-(COXR^4)_m-$ $(NHCO)_n$ -Gruppe steht, in der $R^3$ eine Arylen- oder Arylen-$R^4$-Gruppe ist, worin $R^4$ steht für Alkylen mit 1 bis 6 Kohlenstoffatomen, worin X für -O- oder -NH- steht und worin k, m und n jeweils 0 oder gleich 1 sind, wobei gilt, daß k gleich 0 ist, wenn m gleich 1 ist und daß m gleich 0 ist, wenn k gleich 1 ist.

3. Copolymer nach Anspruch 1 oder 2, worin L für einen Phenylen- oder Phenylenmethylenrest steht.

4. Copolymer nach einem der Ansprüche 1 bis 3, worin -A- für wiederkehrende Einheiten steht, die sich ableiten von einem oder mehreren von Acrylamid; N-Isopropylacrylamid und 2-Acrylamido-2-hydroxymethyl-1,3-propandiol; N-Isopropylacrylamid; N-Hydroxymethylacrylamid; N-(1,1-Dimethyl-3-oxo-butyl)acrylamid; N-Methylmethacrylamid; 2-Acryl-amido-2-hydroxymethyl-1,3-propandiol; Methacrylamid; 3-(3-Dimethylaminopropyl)acrylamid; N,N-Dimethylacrylamid; N,N-Diethylacrylamid; N-Isopropylmethacrylamid und 3-(2-Dimethylaminoethyl)acrylamid.

5. Copolymer nach einem der Ansprüche 1 bis 4, in dem -A- für wiederkehrende Einheiten steht, die sich von Acrylamid ableiten.

6. Copolymer nach einem der Ansprüche 1 bis 5, worin -B- für wiederkehrende Einheiten steht, die sich von einem oder mehreren von Styrol oder Styrolderivaten, Divinyl-, Diacryl- und Diacrylamidmonomeren ableiten.

7. Copolymer nach einem der Ansprüche 1 bis 6, in dem -B- für wiederkehrende Einheiten steht, die sich ableiten von Divinylbenzol, Ethylendiacrylat, Ethylendimethacrylat oder N,N'-Methylenbisacrylamid.

8. Wasserlösliches Copolymer, gekennzeichnet durch die Struktur

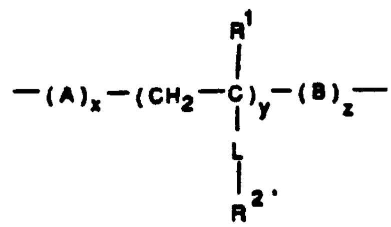

worin bedeuten: L einen substituierten oder unsubstituierten Alkylenrest mit 1 bis 20 Kohlenstoff- und Heteroatomen in der Kette, einen substituierten oder unsubstituierten Arylenrest mit 6 bis 12 Kernkohlenstoffatomen, ein divalentes Heteroatom oder eine ein Heteroatom enthaltende Gruppe,

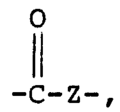

oder eine Kombination von zwei oder mehreren hiervon, wobei ferner Z für eine divalente heterocyclische Gruppe mit 5 bis 7 Kernkohlenstoff- und Kernheteroatomen steht,
-A- wiederkehrende Einheiten, die sich von einem oder mehreren polymerisierten Acrylamidmonomeren ableiten, $R^1$ ein Wasserstoffatom oder eine Methylgruppe, $R^{2'}$ eine Haloacetamidogruppe, -B- wiederkehrende Einheiten, die sich von beliebigen anderen polymerisierten Vinylmonomeren ableiten, und x, y und z Gewichtsprozente der wiederkehrenden Einheiten, wobei x für 50 bis 95 Gew.-% steht, y für 1 bis 50 Gew.-% und z für 0 bis 45 Gew.-%, wobei das Copolymer geeignet zur Herstellung eines Elektrophoresemediums für die elektrophoretische Trennung von großen Molekülen durch Quervernetzung durch eine Reaktion mit einem ausgewählten Quervernetzungsmittel ist, das keinen auf der Bildung freier Radikale beruhenden Vinyladditionsmechanismus einschließt, wobei das Copolymer sich ableitet von einem kleineren Anteil des Haloacetamidocomonomeren, das ein Zentrum für die Quervernetzungsreaktion mit dem ausgewählten Quervernetzungsmittel aufweist, wobei das Copolymer ferner einen $M_n$-Wert von größer als 50000 und einen $M_w$-Wert von größer als 100000 aufweist.

9. Wasserlösliches Copolymer, gekennzeichnet durch die Struktur

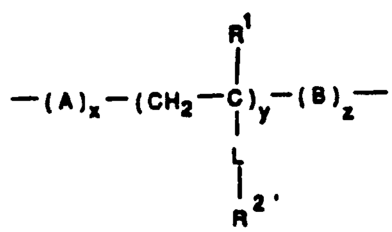

worin bedeuten: L einen substituierten oder unsubstituierten Alkylenrest mit 1 bis 20 Kohlenstoff- und Heteroatomen in der Kette, einen substituierten oder unsubstituierten Arylenrest mit 6 bis 12 Kernkohlenstoffatomen, ein divalentes Heteroatom oder eine ein Heteroatom enthaltende Gruppe,

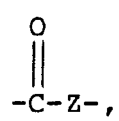

oder eine Kombination von zwei oder mehreren hiervon, wobei Z für eine divalente heterocyclische Gruppe mit 5 bis 7 Kernkohlenstoff- und Kernheteroatomen steht,
-A- wiederkehrende Einheiten, die sich von einem oder mehreren polymerisierten Acrylamidmonomeren ableiten, $R^1$ ein Wasserstoffatom oder eine Methylgruppe, $R^{2'}$ eine Haloacetamidogruppe, -B- wiederkehrende Einheiten, die sich von einem beliebigen anderen polymerisierten Vinylmonomeren ableiten, und x, y und z Gewichtsprozente der wiederkehrenden Einheiten, wobei x für 50 bis 95 Gew.-% steht, y für 1

bis 50 Gew.-% und z für 0 bis 45 Gew.-%, wobei sich das Copolymer zur Herstellung eines Elektrophoresemediums eignet durch Quervernetzung durch Umsetzung mit einem ausgewählten Quervernetzungsmittel, das keinen auf der Bildung von freien Radikalen beruhenden Vinyladditionsmechanismus einschließt, wobei sich das Copolymer ableitet von einem kleineren Anteil des Haloacetamidocomonomeren, das ein Zentrum für die Quervernetzungsreaktion mit dem ausgewählten Quervernetzungsmittel aufweist, wobei das vorgebildete Copolymer weiterhin die folgenden Eigenschaften aufweist:

1) $M_w$ ist ein Wert derart, daß die Addition des 1,25 - 1,5-fachen der stoichiometrischen Menge des ausgewählten Quervernetzungsmittels die Viskosität der Mischung nicht soweit erhöht, daß das Medium nicht in eine 0,15 x 14 x 14 cm große Form innerhalb von 4 bis 10 Minuten nach Zusatz des Quervernetzungsmittels gegossen werden kann, und

2) $M_n$ ist ein solcher Wert, daß eine Quervernetzungsdichte hervorgerufen wird, die ausreicht um ein Gel nach etwa 10 Minuten nach Zugabe der 1,25 bis 1,5-fachen stoichiometrischen Menge des ausgewählten Quervernetzungsmittels zu bilden, wobei das Gel schließlich innerhalb von 2 Stunden nach Eingießen in die Form eine ausreichende Festigkeit aufweist, um aus der Form entnommen werden zu können und um vorsichtig gehandhabt werden zu können, ohne zu zerreißen oder auseinanderzufallen.

**10.** Copolymer nach Anspruch 9 mit einer durchschnittlichen Molekulargewichtszahl, $M_n$,von mindestens 7000 und einem durchschnittlichen Molekulargewicht, $M_w$ , von weniger als 100000.

**11.** Copolymer nach einem der Ansprüche 9 und 10, worin der $M_w$- Wert derart ist, daß die Zugabe des Quervernetzungsmittels die Viskosität nicht so stark erhöht, daß das Medium nicht in die Form innerhalb von 6 bis 8 Minuten nach der Zugabe gegossen werden kann.

**12.** Copolymer nach einem der Ansprüche 9 bis 11, in dem die Anzahl von Äquivalenten vom Quervernetzungszentrenprogramm des Copolymeren im Bereich von 0,45($10^{-4}$) bis 14($10^{-4}$) liegt.

**13.** Verfahren zur Herstellung eines Elektrophorese-Gels in situ, das umfaßt das Vermischen eines Copolymeren nach einem der Ansprüche 1 bis 12 in einer wäßrigen Lösung mit einem ausgewählten Quervernetzungsmittel, das mit den quervernetzbaren Zentren des Copolymeren zu reagieren vermag durch Umsetzung mit dem ausgewählten Quervernetzungsmittel, das keinen auf der Bildung von freien Radikalen beruhenden Vinyladditionsmechanismus einschließt.

**14.** Elektrophorese-Element, dadurch gekennzeichnet, daß es ein quervernetztes Gel aufweist, das nach dem Verfahren des Anspruchs 13 hergestellt worden ist.

**15.** Verwendung des Copolymeren nach einem der Ansprüche 9 und 10 nach Quervernetzung mit dem Quervernetzungsmittel als auflösendes Gel.

**16.** Verwendung des Copolymeren nach Anspruch 8 nach Quervernetzung mit dem Quervernetzungsmittel als ein aufschichtendes (Stacking) Gel.

**17.** Elektrophorese-Element mit einem auflösenden und einem aufschichtenden Gel, das dadurch gekennzeichnet ist, daß das auflösende Gel ein erstes Copolymer nach einem der Ansprüche 9 und 10 aufweist und daß
das aufschichtende Gel ein zweites Copolymer gemäß Anspruch 8 aufweist,
wobei jedes Copolymer als quervernetztes Gel nach dem Verfahren des Anspruches 13 hergestellt worden ist.

**18.** Element nach Anspruch 17, in dem das auflösende Gel hergestellt worden ist unter Verwendung einer wäßrigen Lösung des ersten Copolymeren, das in einer Konzentration von 8 bis 14 % w/v vorliegt, und wobei das aufschichtende Gel hergestellt worden ist unter Verwendung einer wäßrigen Lösung des zweiten Copolymeren, das in einer Konzentration von 1,5 bis 6 % w/v vorliegt.

**19.** Kit für die Elektrophorese, dadurch gekennzeichnet, daß es das Copolymer nach einem der Ansprüche 1 bis 12 aufweist oder eine Kombination des Copolymeren gemäß einem der Ansprüche 1 bis 12, und in einem Behälter getrennt von dem Copolymer oder den Copolymeren, ein Quervernetzungsmittel für die Quervernetzung des Copolymeren durch Umsetzung, die keinen auf der Bildung freier Radikale beruhenden Vinyladditionsmechanismus einschließt.

**20.** Verfahren, Element, Verwendung oder Kit nach einem der Ansprüche 13 und 14 bis 19, wobei das Copolymer mit einem Quervernetzungsmittel quervernetzt ist, bei dem es sich um eine Verbindung handelt mit zwei oder mehreren reaktiven Amino-. Mercapto- oder phenolischen Hydroxygruppen.

**21.** Verfahren, Element, Verwendung oder Kit nach einem der Ansprüche 13 und 14 bis 20, wobei das Quervernetzungsmittel ein Bis-Mercaptan ist, das in seiner Kette die Gruppe

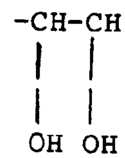

aufweist.

**22.** Verfahren, Element, Verwendung oder Kit nach einem der Ansprüche 13 und 14 bis 20, worin das Quervernetzungsmittel ausgewählt ist aus Ethylendiamin; 1,3-Propandiamin; 1,3-Propandithiol; Dithioerythreitol; Dithiothreitol; 1,5-Pentandiamin; Hexamethylendiamin; Diethylentriamin; Triethylentetramin; Propylendiamin; Di(aminomethyl)ether; 1,8-Diamino-4-(aminomethyl)octan; Xylylendiamin; Hydrochinon; Bisphenol-A; Bisphenolsulfon; 1,4-Butandisulfinsäure; Benzoldisulfinsäure; Thioethanolamin; p-Aminothiophenol oder Butylendiamin.

**23.** Verfahren, Element, Verwendung oder Kit nach einem der Ansprüche 13 und 14 bis 20, wobei das Quervernetzungsmittel besteht aus Dithiothreitol oder Dithioerythreitol.

## Revendications

**1.** Copolymère soluble dans l'eau, caractérisé en ce qu'il répond à la formule :

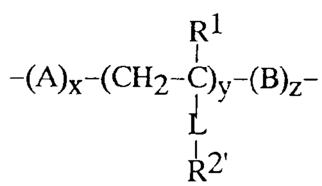

dans laquelle L est un groupe alkylène en $C_1$-$C_{20}$ et ayant des hétéroatomes dans son squelette, substitué ou non, un groupe arylène ayant 6 à 12 atomes de carbone sur le cycle, substitué ou non, un hétéroatome divalent ou un groupe divalent contenant un hétéroatome, un groupe

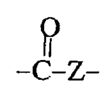

dans lequel Z est un groupe hétérocyclique divalent ayant 5 à 7 atomes de carbone et hétéroatomes sur le cycle ou une combinaison de 2 ou plusieurs d'entre eux,

-A- représente des motifs récurrents dérivés d'un ou plusieurs monomères d'acrylamide polymérisés, $R^1$ est un atome d'hydrogène ou un groupe méthyle, $R^{2'}$ est un groupe halogénoacétamido, -B- représente des motifs récurrents dérivés de n'importe quels autres monomères vinyliques polymérisés et x, y et z représentent les pourcentages pondéraux des motifs récurrents, x étant de 50-95% en poids, y de 1-50% en poids et z de 0-45% en poids, à condition que le copolymère ne contienne pas de motifs récurrents dérivés du N-(3-chloroacétamidopropyl)méthacrylamide, du méthacrylate de 2-chloroacétamidoéthyle, du 4-chloroacétamidostyrène, des m et p-chloroacétamidométhylstyrènes, du N-(3-chloroacétamidocarbonyliminopropyl)méthacrylamide, du méthacrylate de 2-chloroacétamidocarbonyliminoéthyle, du 4-chloroacétamidocarbonyliminostyrène et des m et p-chloroacétamidocarbonyliminométhylstyrènes.

2. Copolymère selon la revendication 1, dans lequel L est un groupe $-(R^3)_k-(COXR^4)_m-(NHCO)_n-$ dans lequel $R^3$ est un groupe arylène ou arylène-$R^4$- dans lequel $R^4$ est un groupe alkylène en $C_1$-$C_6$, X est -O- ou -NH- et k, m et n sont égaux chacun à 0 ou 1, pourvu que k soit égal à 0 lorsque m est égal à 1 et m soit égal à 0 lorsque k est égal à 1.

3. Copolymère selon l'une quelconque des revendications 1 et 2, dans lequel L est un groupe phénylène ou phénylèneméthylène.

4. Copolymère selon l'une quelconque des revendications 1 à 3, dans lequel -A- représente des motifs récurrents dérivés d'un ou plusieurs des monomères suivants : acrylamide, N-isopropylacrylamide et 2-acrylamido-2-hydroxyméthyl-1,3-propanediol, N-hydroxyméthylacrylamide, N-(1,1-diméthyl-3-oxo-butyl)acrylamide, N-méthylméthacrylamide, méthacrylamide, 3-(3-diméthylaminopropyl)acrylamide, N,N-diméthylacrylamide, N,N-diéthylacrylamide, N-isopropylméthacrylamide et 3-(2-diméthylaminoéthyl)acrylamide.

5. Copolymère selon l'une quelconque des revendications 1 à 4, dans lequel -A- représente des motifs récurrents dérivés de l'acrylamide.

6. Copolymère selon l'une quelconque des revendications 1 à 5, dans lequel -B- représente des motifs récurrents dérivés d'un ou plusieurs monomères choisis parmi les suivants : styrène ou dérivés de styrène, divinyle, monomères diacryliques et diacrylamides.

7. Copolymère selon l'une quelconque des revendications 1 à 6, dans lequel -B- représente des motifs récurrents dérivés des monomères suivants : divinylbenzène, diacrylate d'éthylène, diméthacrylate d'éthylène ou N,N'-méthylènebisacrylamide.

8. Copolymère soluble dans l'eau, caractérisé en ce qu'il répond à la formule:

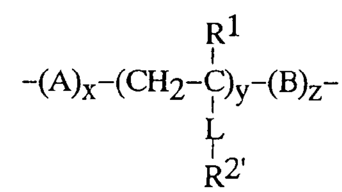

dans laquelle L est un groupe alkylène en $C_1$-$C_{20}$ et ayant des hétéroatomes dans son squelette, substitué ou non, un groupe arylène ayant 6 à 12 atomes de carbone sur le cycle, substitué ou non, un hétéroatome divalent ou un groupe divalent contenant un hétéroatome, un groupe

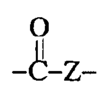

dans lequel Z est un groupe hétérocyclique divalent ayant 5 à 7 atomes de carbone et hétéroatomes sur le cycle ou une combinaison de 2 ou plusieurs d'entre eux,

-A- représente des motifs récurrents dérivés d'un ou plusieurs monomères d'acrylamide polymérisés, $R^1$ est un atome d'hydrogène ou un groupe méthyle, $R^{2'}$ est un groupe halogénoacétamido, -B- représente des motifs récurrents dérivés de n'importe quels autres monomères vinyliques polymérisés et x, y et z représentent les pourcentages pondéraux des motifs récurrents, x étant de 50-95% en poids, y de 1-50% en poids et z de 0-45% en poids, ledit copolymère étant utile pour fabriquer un milieu d'électrophorèse pour la séparation électrophorétique de grosses molécules par réticulation par une réaction avec un agent réticulant choisi ne comportant pas un mécanisme d'addition vinylique par radicaux libres, le copolymère étant dérivé d'une faible proportion du comonomère halogénoacétamido qui contient un centre pour la réaction de réticulation avec l'agent réticulant choisi, le copolymère ayant en outre un poids moléculaire moyen en nombre $M_n$ supérieur à 50 000 et un poids moléculaire moyen en poids $M_w$ supérieur à 100 000.

9. Copolymère soluble dans l'eau, caractérisé en ce qu'il répond à la formule:

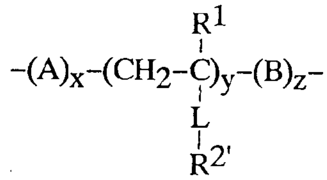

dans laquelle L est un groupe alkylène en $C_1$-$C_{20}$ et ayant des hétéroatomes dans son squelette, substitué ou non, un groupe arylène ayant 6 à 12 atomes de carbone sur le cycle, substitué ou non, un hétéroatome divalent ou un groupe divalent contenant un hétéroatome, un groupe

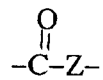

dans lequel Z est un groupe hétérocyclique divalent ayant 5 à 7 atomes de carbone et hétéroatomes sur le cycle ou une combinaison de 2 ou plusieurs d'entre eux.

-A- représente des motifs récurrents dérivés d'un ou plusieurs monomères d'acrylamide polymérisés, $R^1$ est un atome d'hydrogène ou un groupe méthyle, $R^{2'}$ est un groupe halogénoacétamido, -B- représente des motifs récurrents dérivés de n'importe quels autres monomères vinyliques polymérisés et x, y et z représentent les pourcentages pondéraux des motifs récurrents, x étant de 50-95% en poids, y de 1-50% en poids et z de 0-45% en poids, ledit copolymère étant utile pour fabriquer un milieu d'électrophorèse par réticulation par une réaction avec un agent réticulant choisi ne comportant pas un mécanisme d'addition vinylique par radicaux libres, le copolymère étant dérivé d'une faible proportion du comonomère halogénoacétamido qui contient un centre pour la réaction de réticulation avec l'agent réticulant choisi, le copolymère préformé ayant en outre les propriétés suivantes:

1) $M_w$ est tel que l'addition de 1,25 à 1,5 fois la quantité stoechiométrique de l'agent réticulant choisi n'élèvera pas la viscosité du mélange au point que le milieu ne puisse pas être versé dans un moule de 0,15 x 14 x 14 cm en 4 à 10 min après l'addition de l'agent réticulant et

2) $M_n$ est tel qu'il donne une densité de réticulation suffisante pour former un gel après environ 10 min après addition de 1,25 à 1,5 fois la quantité stoechiométrique de l'agent réticulant choisi, le gel ayant finalement une intégrité suffisante en 2 h après la coulée pour être retiré du moule et manipulé doucement sans se déchirer ou se rompre.

**10.** Copolymère selon la revendication 9, ayant un poids moléculaire moyen en nombre $M_n$ d'au moins 7 000 et un poids moléculaire moyen en poids $M_w$ de moins de 100 000.

**11.** Copolymère selon l'une quelconque des revendications 9 et 10, dans lequel le $M_w$ est tel que l'addition de l'agent réticulant n'élève pas la viscosité au point que le milieu ne puisse pas être versé dans le moule en 6 à 8 min après l'addition.

**12.** Copolymère selon l'une quelconque des revendications 9 à 11, dans lequel le nombre d'équivalents de centres de réticulation par gramme du copolymère est dans la gamme de $0{,}45.10^{-4}$ à $14.10^{-4}$.

**13.** Procédé de préparation d'un gel d'électrophorèse in situ comprenant le mélange d'une solution aqueuse d'un copolymère selon l'une quelconque des revendications 1 à 12 avec un agent réticulant choisi qui réagira avec les centres réticulables sur le copolymère par une réaction avec l'agent réticulant choisi ne comportant pas un mécanisme d'addition vinylique par radicaux libres.

**14.** Elément d'électrophorèse, caractérisé en ce qu'il comprend un gel réticulé préparé par le procédé selon la revendication 13.

**15.** Utilisation du copolymère selon l'une ou l'autre des revendications 9 et 10, après réticulation par ledit agent réticulant, comme gel de résolution.

**16.** Utilisation du copolymère selon la revendication 8, après réticulation par ledit agent réticulant, comme gel d'accumulation.

**17.** Elément d'électrophorèse qui comprend un gel de résolution et un gel d'accumulation, l'élément étant caractérisé en ce que le gel de résolution comprend un premier copolymère selon l'une ou l'autre des revendications 9 et 10 et

le gel d'accumulation comprend un second copolymère selon la revendication 8,

chaque copolymère ayant été préparé sous forme d'un gel réticulé par le procédé selon la revendication 13.

**18.** Elément selon la revendication 17, dans lequel le gel de résolution est préparé en utilisant une solution aqueuse du premier copolymère qui est présent à une concentration de 8 à 14% en poids par volume et le gel d'accumulation est préparé en utilisant une solution aqueuse du second copolymère qui est présent à une concentration de 1,5 à 6% en poids par volume.

**19.** Nécessaire pour l'électrophorèse, caractérisé en ce qu'il comprend le copolymère selon l'une quelconque des revendications 1 à 12, ou une combinaison de copolymères selon l'une quelconque des revendications 1 à 12 et, dans un récipient séparé du ou des copolymères, un agent réticulant pour réticuler le copolymère par une réaction ne comportant pas un mécanisme d'addition vinylique par radicaux libres.

**20.** Procédé, élément, utilisation ou nécessaire selon l'une quelconque des revendications 13 et 14 à 19, dans lesquels le copolymère est réticulé par un agent réticulant qui est un composé ayant 2 ou plusieurs groupes réactifs amino, mercapto, ou hydroxy phénoliques.

**21.** Procédé, élément, utilisation ou nécessaire, selon l'une quelconque des revendications 13 et 14 à 20 dans lesquels l'agent réticulant est un bismercaptan ayant dans sa chaîne le groupe

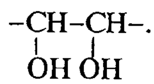

**22.** Procédé, élément, utilisation ou nécessaire selon l'une quelconque des revendications 13 et 14 à 20, dans lesquels l'agent réticulant est choisi parmi les suivants : éthylènediamine, 1,3-propanediamine, 1,3-propanedithiol, dithioérythréitol, dithiothréitol, 1,5-pentanediamine, hexaméthylènediamine, diéthylènetnamine, triéthylènetétramine, propylènediamine, oxyde de bis(aminométhyle), 1,8-diamino-4-(aminométhyl)octane, xylylènediamine, hydroquinone, bisphénol A, bisphénolsulfone, acide 1,4-butanedisulfinique, acide benzènedisulfinique, thioéthanolamine, p-aminothiophénol et butylènediamine.

**23.** Procédé, élément, utilisation ou nécessaire selon l'une quelconque des revendications 13 et 14 à 20, dans lesquels l'agent réticulant est le dithiothréitol ou le dithioérythréitol.